# EUROPEAN PATENT APPLICATION

(11) **EP 1 586 401 A1**
(43) Date of publication of application: **19.10.2005**
(21) Application number: 04076117.3
(22) Date of filing: 16.04.2004
(51) Int. Cl.: B23D 61/12

(54) **Bandsaw blade and method of manufacturing bandsaw blade**

(71) Applicant: Kapman AB, 811 81 Sandviken (SE)
(72) Inventor: Hayden, Robert C., North Fort Myers, FL 33917 (US)
(74) Representative: Axelsson, Nils Ake A.L.

(57) **Abstract**

The present invention concerns a bandsaw blade (1a) comprising a strip and teeth (1-9) projecting therefrom, which teeth (1-9) are arranged in recurring main groups, each main group comprising at least two recurring setting subgroups. The overall set magnitude is the same for each one of the setting subgroups and the individual set magnitude for at least one certain tooth (1-9) in a certain position in a certain setting subgroup differs from the individual set magnitude for the corresponding tooth (1-9) in the corresponding position in at least one of the remaining setting subgroups in the main group.

The present invention also concerns a method of manufacturing a bandsaw blade (1a).

## Description

The present invention concerns a bandsaw blade comprising a strip and teeth projecting therefrom, which teeth are arranged in recurring main groups, each main group comprising at least two recurring setting subgroups. The present invention also concerns a method of manufacturing a bandsaw blade.

### Prior art

Bandsaws have long been used for cutting of hard materials such as metal bars and profiles, their main advantage being that their thickness is lesser than for circular saws, thus wasting less material. They have disadvantages that have hitherto restricted their use, mainly due to the bandsaw blade loosing its torsional stiffness when the cutting force resistance against the tool edge is high. The result is that many tooth shapes and arrangements have been suggested with the purpose of reducing the cutting force required and other force components that might twist the blade. Well known such arrangements include having some teeth straight and longer than others to guide the blade laterally, and letting teeth with unequal height and width divide the cut in several thick chips with lesser width, known as the "Triple Chip" geometry.

One way of reducing the effect of the resulting lateral forces on the toothed edge of the sawblade is to let teeth that have large lateral forces occur in pairs with opposite setting. If the distance between them is small enough they will both be in the cut most of the time, and their individual lateral forces will counterbalance one another. However, small distances also mean that a larger number of teeth will be cutting simultaneously, with a large resulting feed force when cutting solid sections, which is not desirable, or a small feed force on each tooth, which means inefficient cutting and excessive wear.

Another problem is the low in-plane stiffness for many feed forces acting in unison, with a great risk of vibrations if many teeth at equal distances are cutting, causing vibration, noise, rough surfaces and reduced blade life. The reduced blade life is the result of damage to the tooth edge resulting from vibration. If only a few teeth are cutting simultaneously, the lateral forces will not be counterbalanced, which will result in corrugated surfaces on the workpiece finish. For this reason there has always been a "rule of thumb" that a minimum of three cutting teeth should be in contact with the workpiece.

These problems make it difficult to design an optimal bandsaw even for a well defined task, and even more so if the bandsaw is to be used for a variety of materials involving different thickness, hardness, shapes of work pieces and bandsaw machines. Numerous tooth arrangements have been suggested for such situations. Differences in tooth height have been used not only for lateral guidance, but also to let a few longer teeth do most of the cutting in hard materials while still maintaining a reasonable cutting rate, and have all teeth actively cutting in soft materials.

Differences in tooth spacing is used to reduce vibrations and to locate teeth of equal height in pairs without getting too many cutting at the same time. Differences in setting are used to divide the kerf into more chips which are narrower and thicker for improved formation and lower cutting forces. Three set widths are traditional, right-unset-left, but five or more also occur, where lower teeth have larger set widths than higher teeth have.

For rational production, the teeth should be arranged in recurrent groups, corresponding to the widths of grinding, milling, punching and setting tools. Very long recurrent groups require larger tools and larger machines which are very expensive or not always available.

Many suggested tooth arrangements, such as those according to US, A, 4 727 788, utilize differences in all three aspects, variable tooth heights-variable spacing -variable set magnitude, except for a few most are complicated and impractical to manufacture.

US, A, 5 832 803 shows a bandsaw blade comprising recurring groups of six teeth projecting from the blade body. Each group of teeth comprises a first straight tooth having a top edge with two chamfered corners, a second straight tooth, a first pair of equal height set teeth set to opposite respective sides of the blade body by equal setting angles and with top edges forming non-chamfered outer corners and a second pair of equal-height set teeth set to opposite respective sides of the blade body by equal setting angles which are equal to the setting angles of the first pair of set teeth and with top edges forming chamfered outer corners. The bandsaw blade in question, with carbide tipped teeth, however requires a significant amount of grinding during manufacture. The blade creates work hardening zones in a workpiece in the overlap areas between chamfered and non-chamfered teeth leading to less efficient workpiece penetration.

### Summary of the invention

A first purpose of the present invention is to create a bandsaw blade which provides efficient workpiece penetration with reduced cutting forces. A second purpose of the present invention is to create a bandsaw blade which is durable. A third purpose of the present invention is to create a bandsaw blade which is efficiently produced by reducing the amount of grinding required.

The invention thus comprises a bandsaw blade comprising a strip and teeth projecting therefrom, which teeth are arranged in recurring main groups, each main group comprising at least two recurring setting subgroups. The overall set magnitude is the same for each one of the setting subgroups and the individual set magnitude for at least one certain tooth in a certain position in a certain setting subgroup differs from the individual set magnitude for the corresponding tooth in the corresponding position in at least one of the remaining setting subgroups in the main group.

Each main group may comprise at least one recurring geometrical subgroup, each tooth may be of one of at least five types, heavy left set, light left set, unset, light right set and heavy right set respectively, the heavy set teeth being of substantially equal setting and the light set teeth being of substantially equal setting which is less than the setting of the heavy set teeth and each setting subgroup may comprise at least one tooth which is set to the right, at least one unset tooth and at least one tooth which is set to the left.

Each tooth may be of one of at least seven types, heavy left set, medium left set, light left set, unset, light right set, medium right set and heavy right set respectively, the heavy set teeth being of substantially equal setting, the medium set teeth being of substantially equal setting which is less than the setting of the heavy set teeth and the light set teeth being of substantially equal setting which is less than the setting of the medium set teeth and each setting subgroup may comprise at least one tooth which is set to the right, at least one unset tooth and at least one tooth which is set to the left.

A first one of the said at least two recurring setting subgroups may comprise a tooth which is light set to the right constituting a leading tooth of the group, an unset tooth constituting a middle tooth of the group and a tooth which is heavy set to the left constituting a trailing tooth of the group. A second one of the said at least two recurring setting subgroups may comprise a tooth which is heavy set to the right constituting a leading tooth of the group, an unset tooth constituting a middle tooth of the group and a tooth which is light set to the left constituting a trailing tooth of the group. A third one of the said at least two recurring setting subgroups may comprise a tooth which is medium set to the right constituting a leading tooth of the group, an unset tooth constituting a middle tooth of the group and a tooth which is medium set to the left constituting a trailing tooth of the group.

Each one of the said at least two recurring setting subgroups may comprise three teeth. The said unset tooth may have a top edge with two chamfered corners. The said at least one recurring geometrical subgroup may be the same as the said recurring main group. The said at least one recurring geometrical subgroup may comprise six teeth. The said at least one recurring geometrical subgroup may comprise nine teeth.

Each geometrical subgroup may comprise teeth of at least four different heights, extra high, high, low and extra low respectively, and defining a height pattern repeating itself within the group, the extra high teeth being of substantially equal height, the high teeth being of substantially equal height which is less than the height of the extra high teeth, the low teeth being of substantially equal height which is less than the height of the high teeth and the extra low teeth being of substantially equal height which is less than the height of the low teeth.

Each geometrical subgroup may comprise teeth of six different heights. Tooth heights and set magnitudes may be inversely related. The set direction of all set teeth may be reversed, left becomes right and right becomes left.

The invention also comprises a method of manufacturing a bandsaw blade which blade is according to the above stated, using a toothing equipment comprising a punching jaw for setting. Teeth projecting from a strip are formed with the toothing equipment and said teeth, for at least a first setting subgroup of teeth, are set with the punching jaw after which the centerline offset for the punching jaw in relation to the centerline of what is to become the bandsaw blade is varied before said teeth, for at least a second setting subgroup of teeth, are set with the punching jaw.

### List of drawings

Figure 1 shows, in a schematic cross section, a bandsaw blade according to the invention.

Figure 2 shows, in a side view, a part of the bandsaw blade according to figure 1, the part comprising two recurring setting subgroups of teeth.

Figure 3 shows, in a top view, the part according to figure 2.

Figure 4 shows, in a schematic cross section, a second embodiment of the bandsaw blade according to the invention.

Figure 5 shows, in a side view, a part of the bandsaw blade according to figure 4, the part comprising three recurring setting subgroups of teeth.

Figure 6 shows, in a top view, the part according to figure 5.

Figure 7a shows, in a side view as well as a schematic cross section, a part of a bandsaw blade according to a TSX geometry.

Figure 7b shows, in a side view as well as a schematic cross section, a part of a bandsaw blade according to a THQ geometry.

Figure 7c shows, in a side view as well as a schematic cross section, a part of a bandsaw blade according to a TSP geometry according to the invention.

Figure 8 shows, in a diagram, vertical cutting forces for each one of three blade geometries in combination with several work piece materials.

Figure 9 shows, in a diagram, the results according to figure 8 when the cutting forces are presented as percentages relative to the cutting forces for a standard TSX blade.

### Description of modes of execution

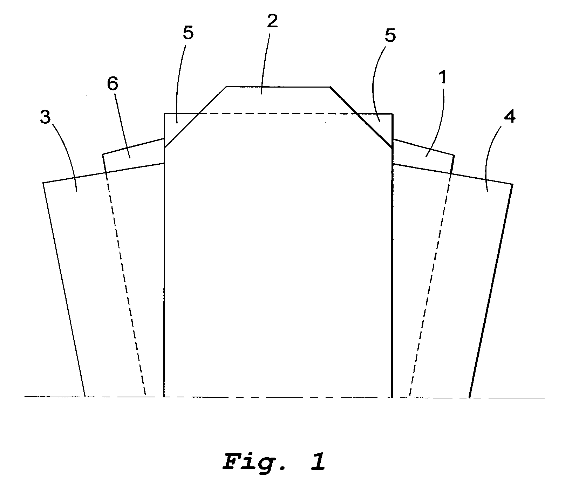

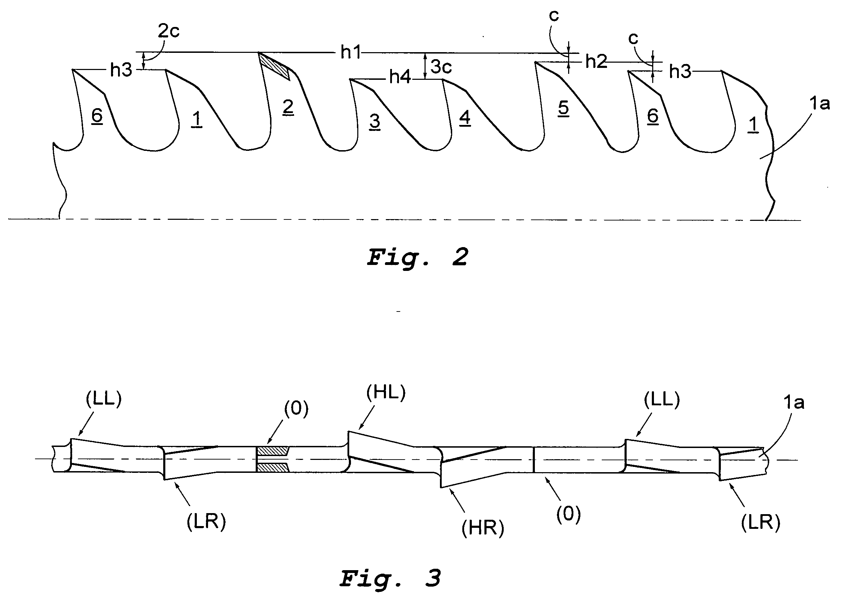

Figure 2 shows a part of a bandsaw blade 1 a according to the invention with a recurrent main group of six teeth 1-6. The recurrent main group is combined with two short recurrent setting subgroups, a first one and a second one, of three teeth each, 1-3 and 4-6 respectively of five setting types, heavy left set (HL), light left set (LL), unset (O), light right set (LR) and heavy right set (HR) respectively the heavy set teeth being of substantially equal setting and the light set teeth being of substantially equal setting which is less than the setting of the heavy set teeth, see figures 1 and 3. Tooth heights and set magnitudes are inversely related. The first tooth 1 is of height h3 and light set to the right, the second tooth 2 is of height h1 and unset, the third tooth 3 is of height h4 and heavy set left, the fourth tooth 4 is of height h4 and heavy set to the right, the fifth tooth 5 is of height h2 and unset and the sixth tooth 6 is of height h3 and set light left. No two teeth in this group of six have the same setting and only tooth 2 is chamfered.

The overall set magnitude is the same for all setting subgroups, i.e. the total set magnitude for the teeth 1-3 (LR+O+HL) of the first setting subgroup is the same as the total set magnitude for the teeth 4-6 (HR+O+LL) of the second setting subgroup when the direction of set is disregarded. Thus the sum of one light right setting and one heavy left setting represents the same setting displacement as the sum of one heavy right setting and one light left setting.

The individual set magnitude for the first tooth 1 of the first setting subgroup differs from the individual set magnitude for the corresponding tooth 4 of the second setting subgroup. The individual set magnitude for the unset second tooth 2 of the first setting subgroup is the same as the individual set magnitude for the unset corresponding tooth 5 of the second setting subgroup, i.e. zero, but the tooth 2 is chamfered when the tooth 5 is non-chamfered. The individual set magnitude for the third tooth 3 of the first setting subgroup differs from the individual set magnitude for the corresponding tooth 6 of the second setting subgroup.

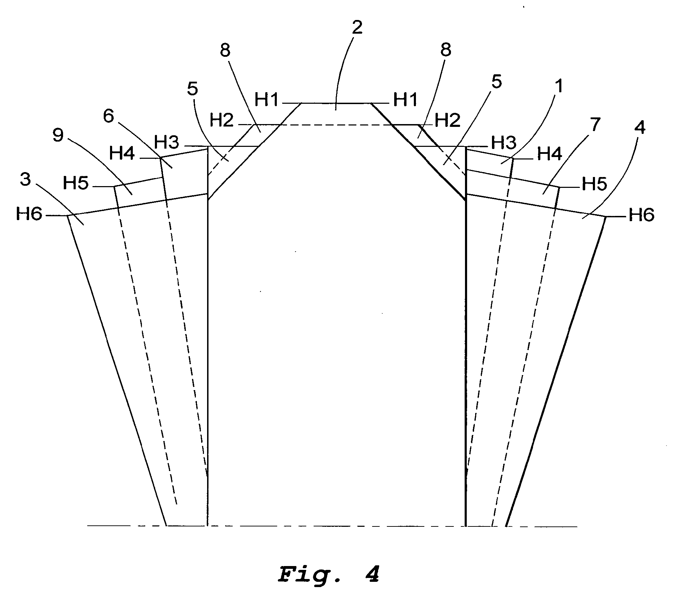

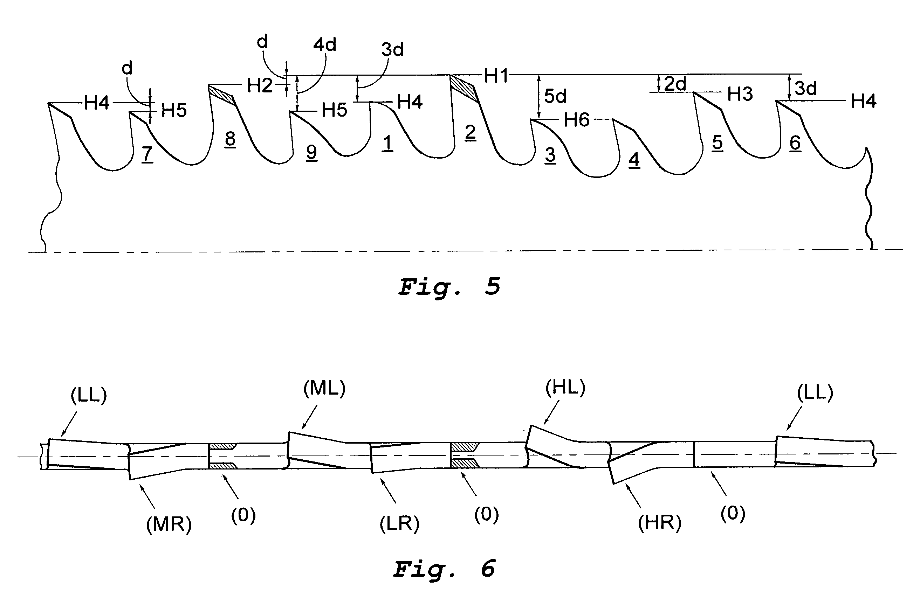

Figure 5 shows a part of a bandsaw blade 1a according to a second embodiment of the invention with a recurrent main group of nine teeth 1-9. The recurrent main group is combined with three short recurrent setting subgroups, a first one, a second one and a third one, of three teeth each, 1-3, 4-6 and 7-9 respectively of seven setting types, heavy left set (HL), medium left set (ML), light left set (LL), unset (O), light right set (LR), medium right set (MR) and heavy right set (HR) respectively, the heavy set teeth being of substantially equal setting, the medium set teeth being of substantially equal setting which is less than the setting of the heavy set teeth and the light set teeth being of substantially equal setting which is less than the setting of the medium set teeth, see figures 4 and 6. Tooth heights and set magnitudes are inversely related. The first tooth 1 is of height H4 and light set to the right, the second tooth 2 is of height H1 and unset, the third tooth 3 is of height H6 and heavy set left, the fourth tooth 4 is of height H6 and heavy set to the right, the fifth tooth 5 is of height H3 and unset, the sixth tooth 6 is of height H4 and set light left, the seventh tooth 7 is of height H5 and set medium right, the eighth tooth 8 is of height H2 and unset and the ninth tooth 9 is of height H5 and set medium left. No two teeth in this group of nine have the same setting and only teeth 2 and 8 are chamfered.

Also regarding this second embodyment of the invention the overall set magnitude is the same for all setting subgroups, i.e. the total set magnitude for the teeth 1-3 (LR+O+HL) of the first setting subgroup is the same as the total set magnitude for the teeth 4-6 (HR+O+LL) of the second setting subgroup and also the same as the total set magnitude for the teeth 7-9 (MR+O+ML) of the third setting subgroup when the direction of set is disregarded. Thus the sum of one light right setting and one heavy left setting represents the same setting displacement as the sum of one heavy right setting and one light left setting. Also the sum of two medium settings, one right and one left, represents the same setting displacement as the sum of one heavy and one light setting.

The individual set magnitude for the first tooth 1 of the first setting subgroup differs from the individual set magnitude for the corresponding tooth 4 of the second setting subgroup. The individual set magnitude for the unset second tooth 2 of the first setting subgroup is the same as the individual set magnitude for the unset corresponding tooth 5 of the second setting subgroup, i.e. zero, but the tooth 2 is chamfered when the tooth 5 is non-chamfered. The individual set magnitude for the third tooth 3 of the first setting subgroup differs from the individual set magnitude for the corresponding tooth 6 of the second setting subgroup.

Also the individual set magnitude for the first tooth 1 of the first setting subgroup differs from the individual set magnitude for the corresponding tooth 7 of the third setting subgroup. The individual set magnitude for the second tooth 2 of the first setting subgroup is the same as the individual set magnitude for the corresponding tooth 8 of the third setting subgroup but the tooth 2 is more chamfered than the tooth 8. The individual set magnitude for the third tooth 3 of the first setting subgroup differs from the individual set magnitude for the corresponding tooth 9 of the third setting subgroup.

By the present invention the concept of low teeth being set heavier than high teeth is utilized. The relative differences in height are evident from the figures 2 and 5 respectively. For the first embodyment of the invention figure 2 shows that the straight raker tooth 2 of the first setting subgroup is the highest tooth in the main group. The second highest tooth is the straight raker tooth 5 of the second setting subgroup and the difference in height between the teeth 2 and 5 is a distance c. The third highest teeth are the light set teeth 1 and 6 and the difference in height between each one of these teeth and the tooth 2 is a distance 2c, i.e. twice the distance c. The fourth highest, and thus the lowest, teeth are the heavy set teeth 3 and 4 and the difference in height between each one of these teeth and the tooth 2 is a distance 3c, i.e. three times the distance c.

For the second embodyment of the invention figure 5 shows that the straight raker tooth 2 of the first setting subgroup is the highest tooth in the main group. The second highest tooth is the straight raker tooth 8 of the third setting subgroup and the difference in height between the teeth 2 and 8 is a distance d. The third highest tooth is the straight raker tooth 5 of the second setting subgroup and the difference in height between the teeth 2 and 5 is a distance 2d, i.e. twice the distance d. The fourth highest teeth are the light set teeth 1 and 6 and the difference in height between each one of these teeth and the tooth 2 is a distance 3d, i.e. three times the distance d. The fifth highest teeth are the medium set teeth 7 and 9 and the difference in height between each one of these teeth and the tooth 2 is a distance 4d, i.e. four times the distance d. The sixth highest, and thus the lowest, teeth are the heavy set teeth 3 and 4 and the difference in height between each one of these teeth and the tooth 2 is a distance 5d, i.e. five times the distance d.

The position of the unset tooth 2 and the position of the unset tooth 5 may be reversed and/or the position of the unset tooth 2 and the position of the unset tooth 8 may be reversed and/or the position of the unset tooth 5 and the position of the unset tooth 8 may be reversed.

The set magnitude of the medium set teeth is substantially half way between the set magnitude of the low set teeth and the set magnitude of the heavy set teeth.

The multi chip, variable set teeth bandsaw blade according to the invention may be conveniently manufactured using a toothing equipment with a short punching jaw for only three teeth. Since the overall set magnitude is to be the same for all setting subgroups and each one of these setting subgroups comprises one tooth which is set to the right and one tooth which is set to the left, these subgroups are created by simply varying the centerline offset for the punching jaw before punching. Thus for the first setting subgroup the punching jaw centerline is offset to the left by a certain distance, for the second setting subgroup the punching jaw centerline is offset to the right by the same certain distance and for any third setting subgroup, which is according to the second embodyment of the invention, the punching jaw centerline is not offset at all in relation to the centerline of what is to become the bandsaw blade. This principle also applies in case each setting subgroup is to comprise more than two set teeth, along with an optional number of unset teeth, as long as the number of teeth that are to be set to the right is the same as the number of teeth that are to be set to the left and the punching jaw in question is correctly adapted regarding, for instance, the total length of the setting subgroup and the respective positions of the teeth within the setting subgroup.

The bandsaw blade according to the invention is comparatively easy to produce and requires far less grinding than the bandsaw blade which is known from the earlier mentioned US, A, 5 832 803. This means an increase in productivity of about 50%. The bandsaw blade according to the invention also shows an efficient workpiece penetration with low cutting forces and straight entering and the blade is also durable.

### Tests

Three different geometries for carbide band saw blades have been tested in different materials considering cutting forces. Wear behaviour in stainless steel has also been tested. Tested bandsaw blades were manufactured at the same time. In order to exclude influence from different rake and release angles the different geometries were produced with a rake angle of 10 degrees and a release angle of 20 degrees. All blades have a regular 2 TPI pitch.

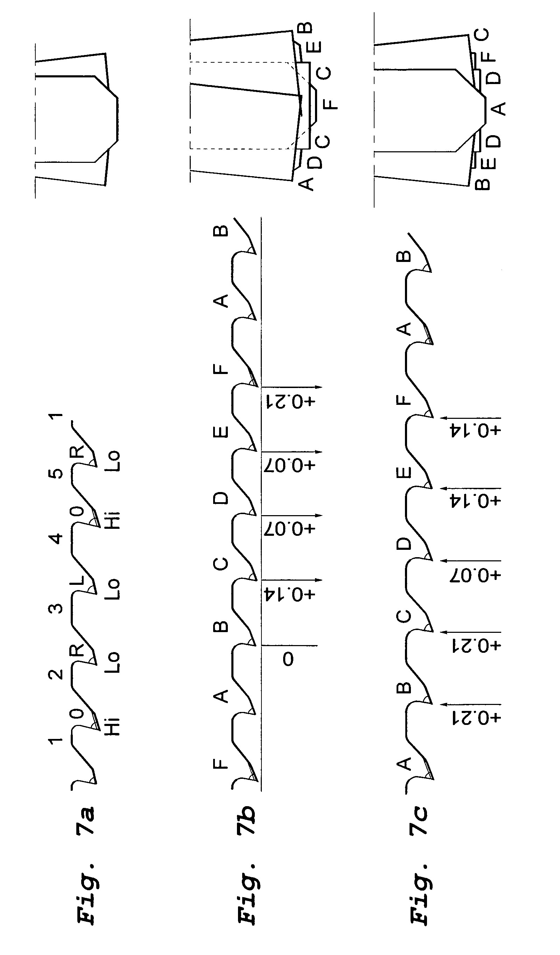

In figures 7a-c we can see the three different geometries. The TSX is triple chip, standard set, geometry. THQ is a more complex geometry with alternating tooth heights and three of six teeth, D - F, with chamfers in order to distribute the chip load. Finally, the TSP is a geometry with the A teeth chamfer ground complemented with two set levels to create a multiple chip geometry according to the present invention.

### General Test Conditions

Machine: Behringer HBP 420
Coolant: Castrol Cooledge SG, 7.5%

### Test outline

- Functional test, to evaluate performance in different materials.

### Test material

### Functional test

For the functional test following materials were used in the sequence as listed below:
- Ovako 803J. Ball bearing steel. ⌀120 mm
- 316L. Stainless steel. ⌀100 mm
- Vanadis 4. Cold work tool steel. 80 x 120 mm
- SAF 2507. Duplex stainless steel. 085 mm
- Sverker 3. Hot work tool steel. 80 x 140 mm
- 304L. Stainless steel. ⌀240/148 mm
- Inconel 718. Nickel base alloy. ⌀130 mm
- 803J. Ball bearing steel. 0120 mm

### Results

### Functional test

The test was started with a running in sequence of three cuts in Ovako 803J. After this five cuts were made for each material with the following parameters.

| **Material** | **No of cuts** | **Speed (m/min)** | **Feed (mm/min)** | **Chip thickness (um)** |
|---|---|---|---|---|
| Ovako 803J. Ball bearing steel. ⌀120 | 1 | 40 | 18 | 4.6 |
| Ovako 803J. Ball bearing steel. ⌀120 | 1 | 60 | 29 | 4.9 |
| Ovako 803J. Ball bearing steel. ⌀120 | 1 | 70 | 33 | 4.8 |
| Ovako 803J. Ball bearing steel. ⌀120 | 5 | 82 | 38 | 4.7 |
| 316L. Stainless steel. ⌀100 | 5 | 89 | 39 | 4.5 |
| Vanadis 4. Cold work tool steel. 80 x 120 | 5 | 65 | 24 | 3.8 |
| SAF 2507. Duplex stainless steel. ⌀85 | 5 | 66 | 25 | 3.8 |
| Sverker 3. Hot work tool steel. 80 x 140 | 5 | 62 | 22 | 3.6 |
| 304L. Stainless steel. ⌀240/148 | 5 | 88 | 32 | 3.7 |
| Inconel 718. Nickel base alloy. ⌀130 | 5 | 22 | 7,4 | 3.4 |
| 803J. Ball bearing steel. ⌀120 | 5 | 82 | 38 | 4.7 |

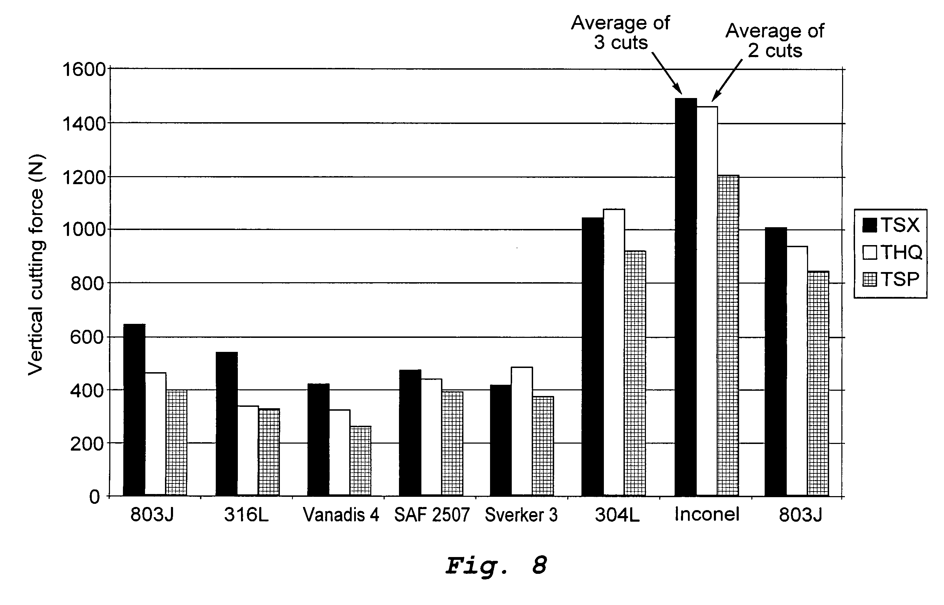

Figure 8 shows the average value of 5 cuts of the maximal vertical cutting force for each material. The results are shown from left to right in the sequence that they were actually cut. Note that in Inconel only the TSP blade were able to complete all 5 cuts. The other blades were stopped because of heavy vibrations due to high vertical forces, the TSX after 3 cuts and the THQ after 2 cuts.

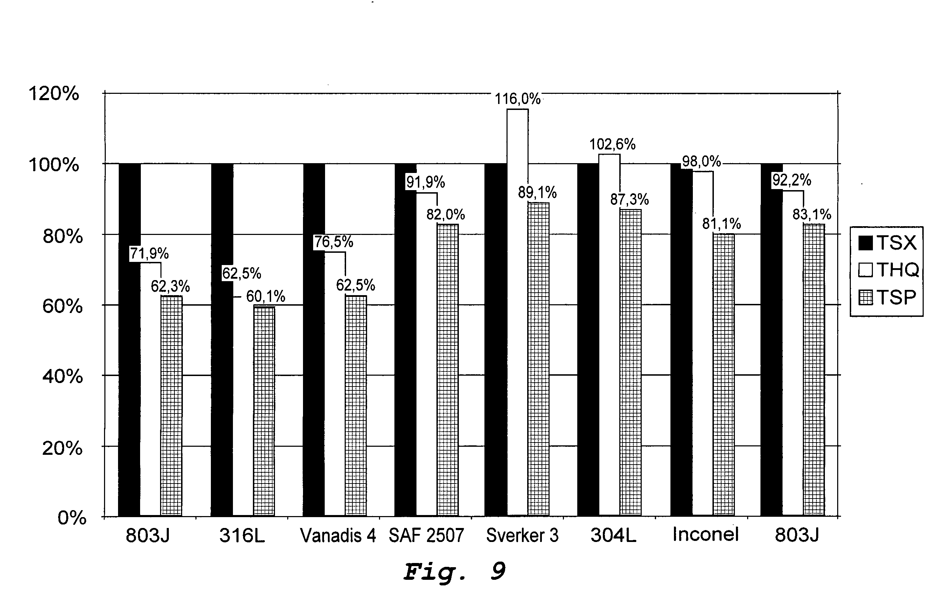

As can be seen the TSP blade has the lowest vertical cutting forces in all materials. If we compare the TSX and the THQ we can see that the cutting forces for the THQ are lower until we cut Sverker 3. For this material and also for 304L the TSX has lower vertical cutting forces compared to the THQ. It is also interesting to see that the difference in vertical cutting force between the TSX and the other blades has decreased when doing the final 5 cuts in 803J compared to the first 5 cuts in the same material. In figure 9 the TSX has been used as reference and the vertical forces for the other blades are expressed in percents compared to the TSX.

### Conclusions

It has been shown that these geometries give significant improvements considering vertical cutting forces. The geometry that gives the best performance considering this aspect is the TSP.

The invention is not limited to the modes of execution shown here but may be varied in accordance with the following patent claims.

## Claims

1. Bandsaw blade (1a) comprising a strip and teeth (1-9) projecting therefrom, which teeth (1-9) are arranged in recurring main groups, each main group comprising at least two recurring setting subgroups, **characterized in that**
the overall set magnitude is the same for each one of the setting subgroups and
the individual set magnitude for at least one certain tooth (1-9) in a certain position in a certain setting subgroup differs from the individual set magnitude for the corresponding tooth (1-9) in the corresponding position in at least one of the remaining setting subgroups in the main group.

2. Bandsaw blade (1a) according to claim 1, where each main group comprises at least one recurring geometrical subgroup, each tooth (1-9) is of one of at least five types, heavy left set, light left set, unset, light right set and heavy right set respectively, the heavy set teeth being of substantially equal setting and the light set teeth being of substantially equal setting which is less than the setting of the heavy set teeth and each setting subgroup comprises at least one tooth (1, 4, 7) which is set to the right, at least one unset tooth (2, 5, 8) and at least one tooth (3, 6, 9) which is set to the left.

3. Bandsaw blade (1a) according to claim 2, where each tooth (1-9) is of one of at least seven types, heavy left set, medium left set, light left set, unset, light right set, medium right set and heavy right set respectively, the heavy set teeth being of substantially equal setting, the medium set teeth being of substantially equal setting which is less than the setting of the heavy set teeth and the light set teeth being of substantially equal setting which is less than the setting of the medium set teeth and each setting subgroup comprises at least one tooth (1, 4, 7) which is set to the right, at least one unset tooth (2, 5, 8) and at least one tooth (3, 6, 9) which is set to the left.

4. Bandsaw blade according to claim 2 and/or 3, where a first one of the said at least two recurring setting subgroups comprises a tooth (1) which is light set to the right constituting a leading tooth of the group, an unset tooth (2) constituting a middle tooth of the group and a tooth (3) which is heavy set to the left constituting a trailing tooth of the group.

5. Bandsaw blade according to any of the claims 2-4, where a second one of the said at least two recurring setting subgroups comprises a tooth (4) which is heavy set to the right constituting a leading tooth of the group, an unset tooth (5) constituting a middle tooth of the group and a tooth (6) which is light set to the left constituting a trailing tooth of the group.

6. Bandsaw blade according to any of the claims 3-5, where a third one of the said at least two recurring setting subgroups comprises a tooth (7) which is medium set to the right constituting a leading tooth of the group, an unset tooth (8) constituting a middle tooth of the group and a tooth (9) which is medium set to the left constituting a trailing tooth of the group.

7. Bandsaw blade according to any of the preceding claims, where each one of the said at least two recurring setting subgroups comprises three teeth (1-3, 4-6, 7-9).

8. Bandsaw blade according to any of the claims 4 and/or 6, where the said unset tooth (2, 8) has a top edge with two chamfered corners.

9. Bandsaw blade according to any of the claims 2-8, where the said at least one recurring geometrical subgroup is the same as the said recurring main group.

10. Bandsaw blade according to any of the claims 2-9, where the said at least one recurring geometrical subgroup comprises six teeth (1-6).

11. Bandsaw blade according to any of the claims 2-9, where the said at least one recurring geometrical subgroup comprises nine teeth (1-9).

12. Bandsaw blade according to any of the claims 2-11, where each geometrical subgroup comprises teeth of at least four different heights, extra high, high, low and extra low respectively, and defining a height pattern repeating itself within the group, the extra high teeth being of substantially equal height, the high teeth being of substantially equal height which is less than the height of the extra high teeth, the low teeth being of substantially equal height which is less than the height of the high teeth and the extra low teeth being of substantially equal height which is less than the height of the low teeth.

13. Bandsaw blade according to claim 12, where each geometrical subgroup comprises teeth of six different heights.

14. Bandsaw blade according to any of the claims 12 and/or 13, where tooth heights and set magnitudes are inversely related.

15. Bandsaw blade according to any of the preceding claims, where the set direction of all set teeth (1, 3, 4, 6, 7, 9) are reversed, left becomes right and right becomes left.

16. Method of manufacturing a bandsaw blade (1 a) which blade is according to any of the preceding claims, using a toothing equipment comprising a punching jaw for setting, **characterized in that**
teeth (1-9) projecting from a strip are formed with the toothing equipment and
said teeth (1-9), for at least a first setting subgroup of teeth (1-3), are set with the punching jaw after which the centerline offset for the punching jaw in relation to the centerline of what is to become the bandsaw blade (1 a) is varied before said teeth (1-9), for at least a second setting subgroup of teeth (4-6), are set with the punching jaw.
